**Europäisches Patentamt**

**European Patent Office**

**Office européen des brevets**

(19)

(11) Veröffentlichungsnummer: **0 178 467**
**B1**

(12) # EUROPÄISCHE PATENTSCHRIFT

(45) Veröffentlichungstag der Patentschrift:
27.04.88

(21) Anmeldenummer: 85111640.0

(22) Anmeldetag: 14.09.85

(51) Int. Cl.⁴: **B 64 D 17/80**, B 64 C 39/02

(54) **Unbemannter Flugkörper mit einem Fallschirmbergesystem.**

(30) Priorität: 16.10.84 DE 3437824

(43) Veröffentlichungstag der Anmeldung:
23.04.86 Patentblatt 86/17

(45) Bekanntmachung des Hinweises auf die Patenterteilung:
27.04.88 Patentblatt 88/17

(84) Benannte Vertragsstaaten:
FR GB IT

(56) Entgegenhaltungen:
DE-A-3 233 735
US-A-4 113 208

(73) Patentinhaber: Messerschmitt- Bölkow- Blohm
GmbH, Hünefeldstrasse 1-5, D-2800 Bremen 1 (DE)

(72) Erfinder: Dellinger, Jürgen, Am Osterfeld 24,
D-2807 Achim- Uphusen (DE)
Erfinder: Krämer, Ulrich, Schwalbenstrasse 8,
D-2808 Syke- Barrien (DE)
Erfinder: Schlieske, Rainer, Wittekindstrasse 32,
D-2875 Ganderkesee (DE)
Erfinder: Wohlers, Heinz, Amersforter Strasse 6,
D-2800 Bremen (DE)

## Beschreibung

Die Erfindung betrifft einen unbemannten Flugkörper mit einem Fallschirmbergesystem für eine Horizontallandung bei der Rückkehr, bei dem ein im Flugkörper unter einer im rückwärtigen Rumpfbereich angeordneten, nach außen verschwenkbaren und in der ausgeschwenkten Position haltbaren Klappe verstauter Fallschirm zu Beginn der Landephase ausgestoßen wird und der Flugkörper an diesem hängend zu Boden sinkt.

Bei der Rückkehr ferngesteuerter, beispielsweise zu Aufklärungszwecken eingesetzter Flugkörper, ist es bereits bekannt, daß die Landung dieser Geräte durch einen im Flugkörper mitgeführten Fallschirm realisiert wird, der ausgelöst von einem vom Boden aus gegebenen Befehl, ausgestoßen wird, sobald der Flugkörper das vorgesehene Landegebiet erreicht hat und an dem der Flugkörper zu Boden gleitet. Bei diesem Landeverfahren ist es vergleichsweise schwierig, den Flugkörper exakt im vorgesehenen Zielgebiet landen zu lassen. Weitere Schwierigkeiten können sich insbesondere dann ergeben, wenn es sich bei dem Flugkörper um einen solchen mit einem heckseitig angeordneten Propellerantrieb handelt. In diesem Fall besteht die Gefahr, daß der Fallschirm beim Ausstoß von der noch laufenden Luftschraube erfaßt wird.

Insbesondere ist aus der US-A-4 113 208 eine Anordnung bekannt, bei der ein bemannter Flugkörper mit einem Fallschirmbergesystem ausgerüstet ist, wie es eingangs beschrieben ist, das in diesem Fall als Rettungssystem bei etwaigen Störfällen, wie z. B. einem Triebwerksausfall, dient. Bei diesem bekannten System ist die den Stauraum für den Fallschirm verschließende Klappe auf der Oberseite des Flugkörpers angeordnet und um eine horizontale Achse nach hinten verschwenkbar gehalten.

Der Erfindung liegt daher die Aufgabe zugrunde, einen Flugkörper der eingangs genannten Art so auszubilden, daß eine möglichst zielgenaue Landung möglich ist. Weiterhin ist es Aufgabe der Erfindung, insbesondere bei einem von einem Heckpropeller angetriebenen Flugkörper sicherzustellen, daß beim Ausstoß des Landefallschirms dieser nicht in den Bereich der Luftschraube gerät.

Die Erfindung löst diese Aufgabe mit den im kennzeichnenden Teil des Patentanspruchs 1 angegebenen Merkmalen. Zur Lösung der weiteren Aufgabe dient insbesondere die in Patentansprüchen 2 und 5 aufgeführten Maßnahmen. Die entsprechend den weiteren Ansprüchen 3, 4 und 6 vorgesehenen Maßnahmen betreffen darüber hinaus Möglichkeiten, den Flugkörper nach der Erfindung kostengünstig und dabei dennoch funktionssicher im Hinblick auf die Erfüllung der beschriebenen Anforderungen auszuarbeiten.

Im folgenden soll die Erfindung anhand eines in der Zeichnung dargestellten Ausführungsbeispiels näher erläutert werden. Es zeigen:

Fig. 1 einen Teil eines Flugkörpers in Draufsicht und

Fig. 2 eine schematische Darstellung des Landevorganges des Flugkörpers.

In den Figuren sind gleiche Bauteile mit den gleichen Bezugszeichen versehen.

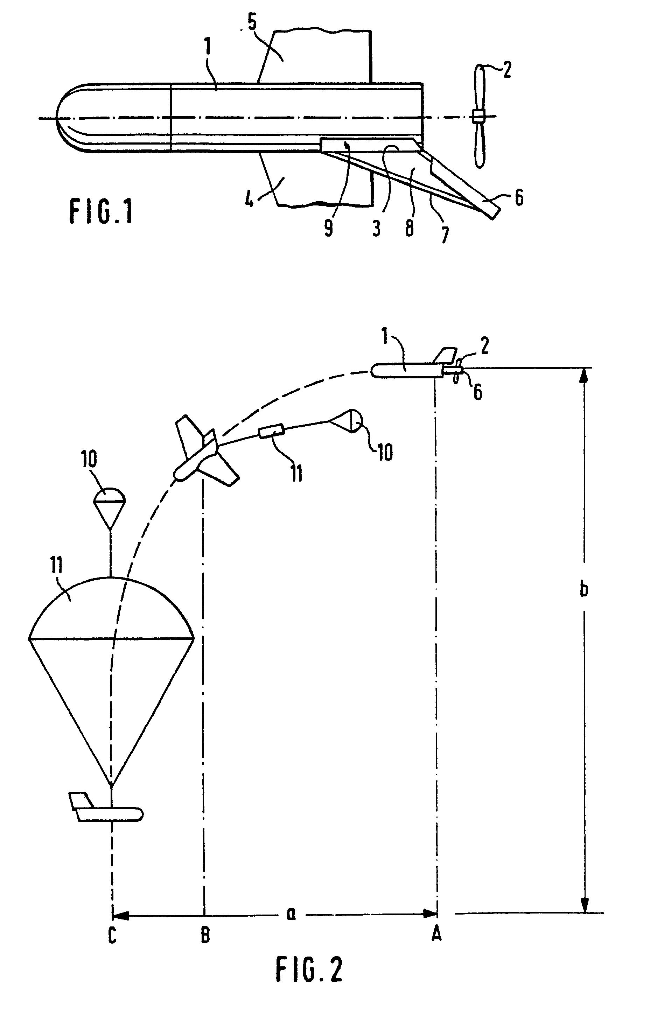

Bei dem in Fig. 1 dargestellten Flugkörper handelt es sich um ein unbemanntes, ferngesteuertes Fluggerät, das vorwiegend zu Aufklärungszwecken eingesetzt wird. Dabei ist im Bug des Flugkörperrumpfes 1 die dazu erforderliche elektronische bzw. optische Ausrüstung angeordnet, während der für den Marschflug erforderliche Antrieb von einem im Rumpfheck angeordneten Propellerantrieb erzeugt wird, dessen Luftschraube 2 sich am Heck des Flugkörpers befindet. Unmittelbar vor dem Rumpfheck ist, im Fall des hier dargestellten Ausführungsbeispiels der Erfindung auf der Backbordseite, eine seitliche Öffnung 3 vorgesehen, die sich nach vorn in etwa bis zur halben Profiltiefe der Tragflächen 4 und 5 erstreckt und die durch eine Klappe 6 verschließbar ist. Die Klappe 6 ist mit ihrer hinteren Kante am Flugkörperrumpf 1 angelenkt und um eine in bezug auf den Flugkörper angenähert vertikale Achse nach außen verschwenkbar.

Das vordere Ende der Klappe 6 ist über einen Fanggurt 7 mit dem vorderen Endbereich der Öffnung 3 verbunden. Darüberhinaus ist zwischen der unteren Kante der Klappe 6 und dem unteren Rand der Öffnung 3 ein Tuch 8 befestigt, das die Form eines annähernd gleichschenkligen Dreiecks aufweist. Der Fanggurt 7 sowie das Tuch 8 sind dabei so bemessen, daß sie der Klappe 6 einen maximalen Öffnungswinkel von etwa 135° gestatten.

In dem von der Klappe 6 abgedeckten Raum 9 ist ein Fallschirmbergesystem für den Flugkörper untergebracht, das aus einem Ausziehschirm 10 und einem Landefallschirm 11 besteht.

Die Funktionsweise der erfindungsgemäßen Anordnung ist dabei wie folgt:

Während sich der Fallschirm im Marschflug befindet, ist die Klappe 6 verschlossen; das Fallschirmbergesystem liegt zusammengefaltet im dafür vorgesehenen Raum 9.

Zu Beginn der Landephase, etwa im Punkt A in der Darstellung des Landevorgangs gemäß Fig. 2, wird durch einen vom Boden erteilten Funkbefehl die zunächst arretierte Klappe 6, in diesem Fall unter dem Druck einer hier nicht dargestellten Feder, geöffnet. Die Klappe schwenkt, nunmehr auch durch den anströmenden Luftstrom beaufschlagt, sofort in ihre durch die Länge des Fanggurtes 7 vorgegebene Endlage, in der sie einen Winkel von etwa 135° mit der Flugkörperlängsachse bildet und durch ihren Luftwiderstand einerseits und den Fanggurt 7 andererseits arretiert ist.

In dieser Position übt die Klappe 6 eine seitenruderartige Wirkung auf den Flugkörper aus und leitet dadurch eine Drehung desselben um seine Hochachse ein. Zugleich wird der Ausziehfallschirm 10 ausgestoßen, der sich entfaltet und seinerseits den Landefallschirm 11 aus dem Flugkörper bzw. aus der Öffnung 3 reißt. Die von der ausgeschwenkten Klappe 6 bewirkte Gegenbewegung führt dabei zu einer günstigen relativen Lage zwischen dem Flugkörper und dem Fallschirm in dieser ersten Phase. Zugleich schirmt die Klappe 6 in ihrer ausgeschwenkten Position die Luftschraube 2 des Propellerantriebes gegen das sich öffnende Fallschirmsystem ab. Dies wird außerdem noch unterstützt durch das Tuch 8, das sich während des Öffnens der Klappe 6 auch entfaltet hat und das zusammen mit dieser quasi eine Führung für den vom Ausziehfallschirm 10 beaufschlagten Landefallschirm 11 bildet.

Durch die Seitenruderwirkung der Klappe 6 ergibt sich dabei ein kürzest möglicher, reproduzierbarer Übergang aus dem Geradeausflug in den horizontalen Sinkflug. Der Flugkörper geht aus der anfänglichen Gierbewegung in eine Rollbewegung über und vollführt anschließend eine Steilspirale mit etwa einer halben Drehung. Diese führt in kürzest möglicher Zeit in die in Fig. 2, Punkt C dargestellte Endlage, in der der Flugkörper mit nunmehr agbeschaltetem Propellertriebwerk am Fallschirm 11 hängend, mit konstanter Sinkgeschwindigkeit, zu Boden sinkt. Aufgrund des sehr kurzen Zeitraums, der zwischen dem Einleiten des Landevorganges durch das Öffnen der Klappe 6 im Punkt A und dem Erreichen der stabilen Endlage im Punkt C vergeht, ist die insgesamt während dieser Phase zurückgelegte Wegstrecke a vergleichsweise kurz, so daß eine zielgenaue Landung ermöglicht wird. Durch den jederzeit reproduzierbaren und definierten Übergang aus dem Marschflug in die Sinkphase ist der dabei auftretende Höhenverlust b ebenfalls relativ gering, so daß der Landevorgang bei geringerer Flughöhe ausgelöst werden kann und ein seitliches Abdriften im Sinkflug überdies auf ein Minimum reduziert wird.

## Patentansprüche

Unbemannter Flugkörper mit einem Fallschirmbergesystem für eine Horizontallandung bei der Rückkehr, bei dem ein im Flugkörper unter einer im rückwärtigen Rumpfbereich angeordneten, nach außen verschwenkbaren und in der ausgeschwenkten Position haltbaren Klappe (6) verstauter Fallschirm (11) zu Beginn der Landephase ausgestoßen wird und der Flugkörper an diesem hängend zu Boden sinkt, dadurch gekennzeichnet, daß die Klappe (6) seitlich am Flugkörperrumpf (1) angeordnet und um eine in Bezug auf den Flugkörper angenähert vertikale Achse verschwenkbar gehaltert ist und daß sie in der ausgeschwenkten Lage arretierbar ist.

2. Unbemannter Flugkörper nach Anspruch 1, insbesondere mit einem heckseitig angeordneten Propellerantrieb, dadurch gekennzeichnet, daß die Klappe (6) an ihrem in Flugrichtung gesehen hinteren Ende angelenkt ist.

3. Unbemannter Flugkörper nach Anspruch 2, dadurch gekennzeichnet, daß zur Arretierung der Klappe (6) in der ausgeschwenkten Stellung ein Fanggurt (7) vorgesehen ist.

4. Flugkörper nach Anspruch 2 oder 3, dadurch gekennzeichnet, daß die Klappe (6) in ihrer ausgeschwenkten Stellung einen Winkel mit einem Bereich vom 90° bis 150° mit der Flugkörperlängsachse bildet.

5. Flugkörper nach einem der Ansprüche 1 bis 4, dadurch gekennzeichnet, daß zwischen dem Flugkörperrumpf (1) und wenigstens einer der Längskanten der Klappe (6) ein entfaltbares Tuch (8) angeordnet ist, dessen Form im entfalteten Zustand dem zwischen der ausgeschwenkten Klappe (6) und der zugehörigen Längskante der von der Klappe (6) verschließbaren Öffnung (3) aufgespannten Dreieck entspricht.

6. Flugkörper nach einem der Ansprüche 1 bis 5, dadurch gekennzeichnet, daß zum Ausziehen des Hauptfallschirmes (11) z. B. ein separater Ausziehfallschirm (10) vorgesehen ist.

## Claims

1. Unmanned aircraft with a parachute storing system for a horizontal landing on return, in which at the beginning of the landing phase there is ejected a parachute (11), which is stowed in the aircraft under a flap (6), which is arranged in the rearward fuselage region, and which is outwardly pivotable and which can be held in the swung out position, hanging on which parachute the aircraft falls to the ground, characterised in that the flap (6) is arranged laterally on the aircraft fuselage (1) and is pivotally mounted about an axis which is approximately vertical relative to the aircraft, and in that the flap can be restrained in the swung out position.

2. Unmanned aircraft according to claim 1, especially with any propellor drive arranged at the tail, characterised in that the flap (6) is pivotted at its rear end as seen in the direction of flight.

3. Unmanned aircraft according to claim 2, characterised in that to restrain the flap (6) in the swung out position a folding belt (7) is provided.

4. Aircraft according to claim 2 or 3, characterised in that the flap (6) in its swung out position forms an angle in the range 90° to 150° with the longitudinal axis of the aircraft.

5. Aircraft according to any of claims 1 to 4, characterised in that between the aircraft fuselage (1) and at least one of the longitudinal edges of the flap (6) there is arranged an unfoldable fabric (8) the shape of which in the unfolded condition corresponds to the spread out triangle between the swung out flap (6) and the associated longitudinal edge of the opening (3)
which is closable by the flap (6).

6. Aircraft according to any of claims 1 to 5
characterised in that to pull out the main
parachute (11) there is provided e.g. a separate
auxiliary parachute (10).

**Revendications**

1. Engin aérien sans pilote comportant un
système de parachute pour un atterrissage en
position horizontale en retour, le corps de l'engin
comportant un volet (6) susceptible de basculer
vers l'extérieur et qui peut être retenu en position
basculée, avec un parachute (11) expulsé en
début de phase d'atterrissage, l'engin
descendant vers le sol accroché à ce parachute,
engin caractérisé en ce que le volet (6) est prévu
sur le côte du corps (1) de l'engin et est maintenu
basculant autour d'un axe pratiquement vertical
par rapport au corps de l'engin, ce volet pouvant
être bloqué en position basculée vers l'extérieur.

2. Engin aérien sans pilote selon la
revendication 1, comportant notamment un
moyen d'entraînement à hélice situé à l'arrière,
engin caractérisé en ce que le volet (6) est
articulé à son extrémité arrière prise dans la
direction du vol.

3. Engin aérien sans pilote selon la
revendication 2, caractérisé en ce qu'il comporte
un câble (7) pour bloquer le volet (6) en position
basculée vers l'extérieur.

4. Engin aérien selon la revendication 2 ou la
revendication 3, caractérisé en ce que le volet (6)
forme en position basculée vers l'extérieur un
angle compris entre 90° et 150° par rapport à
l'axe longitudinal de l'engin.

5. Engin aérien selon l'une des revendications 1
à 4, caractérisé par une toile (8) susceptible
d'être dépliée entre le corps (1) de l'engin et au
moins l'une des arêtes longitudinales du volet (6),
la form de cette toile à l'état déplié
correspondant au triangle sous-tendu entre le
volet (6) basculé vers l'extérieur et l'arête
longitudinale correspondante de l'ouverture (3)
férmée par le volet (6).

6. Engin aérien selon l'une des revendications 1
à 5, caractérisé par un parachute par exemple
d'extraction (10) pour extraire le parachute
principal (11).

FIG.1

FIG.2